(19) Europäisches Patentamt
European Patent Office
Office européen des brevets

(11) **EP 2 852 067 B1**

(12) **EUROPEAN PATENT SPECIFICATION**

(45) Date of publication and mention
of the grant of the patent:
**16.11.2016 Bulletin 2016/46**

(51) Int Cl.:
*H04B 3/32* *(2006.01)*   *H04L 1/00* *(2006.01)*
*H04M 3/18* *(2006.01)*   *H04M 11/06* *(2006.01)*
*H04M 3/34* *(2006.01)*

(21) Application number: **13290227.1**

(22) Date of filing: **23.09.2013**

(54) **Devices and methods for pre- and post-compensation of cross-talk**

Vorrichtungen und Verfahren zur vorangegangenen und nachträglichen Kompensation von Übersprechen

Dispositifs et procédés pour pré- et post-compensation de diaphonie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.03.2015 Bulletin 2015/13**

(73) Proprietor: **ALCATEL LUCENT**
**92100 Boulogne-Billancourt (FR)**

(72) Inventors:
• **Maes, Jochen**
**2018 Antwerpen (BE)**
• **Timmers, Michael**
**2018 Antwerpen (BE)**
• **Mahdi, Ben Ghorbel**
**2018 Antwerpen (BE)**
• **Guenach, Mamoun**
**2018 Antwerpen (BE)**

(74) Representative: **ALU Antw Patent Attorneys**
**Copernicuslaan 50**
**2018 Antwerpen (BE)**

(56) References cited:
• **Colmegna ET AL: "Methods for Supporting Vectoring when Multiple Service Providers Share the Cabinet Area", , 1 April 2012 (2012-04-01), XP055095498, Retrieved from the Internet: URL:http://www.assia-inc.com/technology/kn owledge-center/white-papers/FASTWEB-ASSIA**
**_**
**White_Paper_on_Vectoring_(April%202012).pd f [retrieved on 2014-01-09]**
• **KERPEZ K ET AL: "Compatibility of vectored and non-vectored VDSL2", INFORMATION SCIENCES AND SYSTEMS (CISS), 2012 46TH ANNUAL CONFERENCE ON, IEEE, 21 March 2012 (2012-03-21), pages 1-6, XP032241400, DOI: 10.1109/CISS.2012.6310771 ISBN: 978-1-4673-3139-5**

## Description

### Field of the Invention

The present invention relates to access networks connecting end user nodes or Customer Premises Equipment CPE to a data network over access nodes. Each end user node is connected to a nearby access node over a transport link or communication line such as for example a twisted copper pair. The signal processing chain to process communication signals is distributed over the access network. This is done by performing part of the processing chain centrally in a Central Processing Unit CPU and a part of the processing chain in a Distributed Processing Unit DPU directly connected to a transport link or communication line. More particularly, the invention relates to the performing of vector processing operations in the signal processing chain in order to cancel out cross-talk occurring between the different transport links.

### Background of the Invention

Crosstalk (or inter-channel interference) is a major source of channel impairment for Multiple Input Multiple Output (MIMO) wired communication systems, such as Digital Subscriber Line (DSL) communication systems.

As the demand for higher data rates increases, DSL systems are evolving toward higher frequency bands, wherein crosstalk between neighbouring transmission lines (that is to say transmission lines that are in close vicinity over part or whole of their length, such as twisted copper pairs in a cable binder) is more pronounced (the higher frequency, the more coupling).

Different strategies have been developed to mitigate crosstalk and to maximize effective throughput, reach and line stability. These techniques are gradually evolving from static or dynamic spectral management techniques to multiuser signal coordination (or vectoring). One technique for reducing inter-channel interference is joint signal precoding: the transmit data symbols are jointly passed through a precoder before being transmitted over the respective communication channels. The precoder is such that the concatenation of the precoder and the communication channels results in little or no inter-channel interference at the receivers.

A further technique for reducing inter-channel interference is joint signal post-processing: the received data symbols are jointly passed through a postcoder before being detected. The postcoder is such that the concatenation of the communication channels and the postcoder results in little or no inter-channel interference at the receivers.

The choice of the vectoring group, that is to say the set of communication lines, the signals of which are jointly processed, is rather critical for achieving good crosstalk mitigation performances. Within a vectoring group, each communication line is considered as a disturber line inducing crosstalk into the other communication lines of the group, and the same communication line is considered as a victim line receiving crosstalk from the other communication lines of the group. Crosstalk from lines that do not belong to the vectoring group is treated as alien noise and is not cancelled.

Ideally, the vectoring group should match the whole set of communication lines that physically and noticeably interact with each other. Yet, local loop unbundling (imposed by national regulation policies) and/or limited vectoring capabilities may prevent such an exhaustive approach, in which case the vectoring group would include a sub-set only of all the physically interacting lines, thereby yielding limited vectoring gains. Signal vectoring is typically performed within an access node, wherein all the data symbols concurrently transmitted over, or received from, all the communication lines of the vectoring group are available. For instance, signal vectoring is advantageously performed within a Digital Subscriber Line Access Multiplexer (DSLAM) deployed at a Central Office (CO) or as a fibre-fed remote unit closer to subscriber premises (street cabinet, pole cabinet, building cabinet, etc).

Signal precoding and thus pre-compensation of cross-talk is particularly appropriate for downstream communication (toward customer premises), while signal postprocessing and thus post-compensation of cross-talk is particularly appropriate for upstream communication (from customer premises).

Linear signal precoding and post-processing are advantageously implemented by means of matrix products. For instance, a linear precoder performs a matrix product of a vector of transmit frequency samples with a precoding matrix, the precoding matrix being such that the overall channel matrix is diagonalized, meaning the off-diagonal coefficients of the overall channel, and thus the inter-channel interference, mostly reduce to zero. Practically, and as a first order approximation, the precoder superimposes anti-phase crosstalk pre-compensation signals over the victim line along with the direct signal that destructively interfere at the receiver with the actual crosstalk signals from the respective disturber lines. Similarly, a linear postcoder performs a matrix-product of a vector of received frequency samples with a crosstalk cancellation matrix, the crosstalk cancellation matrix being such that the overall channel matrix is diagonalized too.

With the evolution in xDSL techniques, the access nodes are placed closer and closer to the Customer Premises Equipment shortening the communication lines and thus allowing higher bandwidths on the communication lines. At the same time, to keep the cost of this fragmentation under control, parts of the signal processing has been moved away from the access node to higher order nodes such as for example the Central Office. This way, downlink and uplink signal processing may be performed partially in a Distributed Processing Unit DPU in an access node and partially in a Central Processing Unit either in the same access node or in a higher order node.

A single DPU may then connect a predetermined maximum number of communication lines. However, cross-talk may also occur between communication lines connected to distinct DPUs as lines connected to distinct DPUs may be part of the same bundle.

Several solutions exist to implement vector processing in access networks comprising DPUs and a CPU, ranging from centralized scenarios where the vector processing is completely implemented in the CPU to distributed scenarios where the vector processing is completely implemented in the DPUs. However, each of them has its drawbacks.

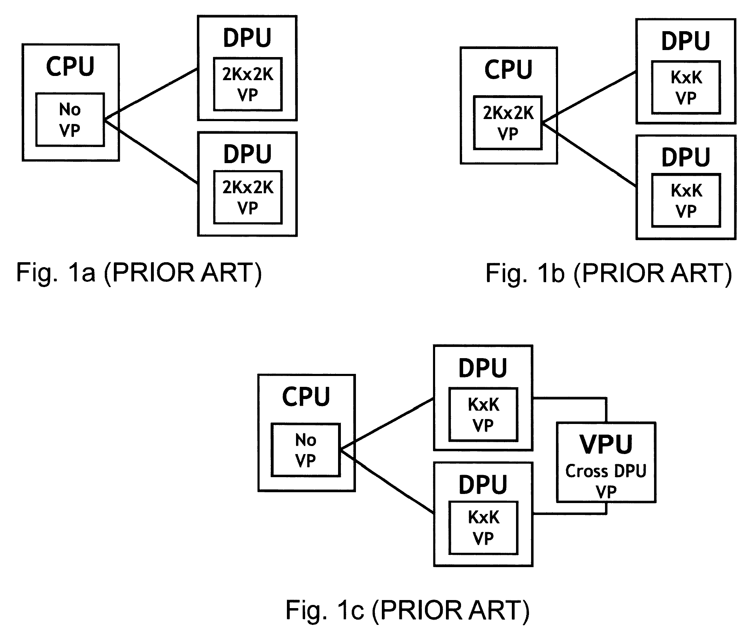

Fig. 1a illustrates a first existing solution in an exemplary scenario where one CPU is connected to L=2 DPUs each being connected with K end user nodes by K corresponding transport links. In this first solution cross-talk from all LxK lines is compensated in each DPU of K lines. Therefore, each DPU requires a KxLK vector processing unit, i.e. a unit capable of performing a KxLK matrix multiplication. A first problem with this solution is that it is not known beforehand how much DPUs will be used in parallel to connect a bundle of transport links. Therefore, the DPU cannot only be dimensioned according to the number of transport links K, but has to be dimensioned also according to the number of DPUs that will be used in parallel. A second problem of this solution is that all vector processing is performed in the DPU which is generally limited in power consumption. This may be because of the physical dimensions of the access node or because the DPU is powered from the end user node over the transport link. A third problem of this solution is that all communication signals, i.e. the signals targeted to each end user node of each DPU, has to be sent to all DPUs. This jeopardises the bandwidth of the backhaul between the CPU and the DPU and input bandwidth of the DPU.

Fig. 1b illustrates a second existing solution in the same scenario, i.e. L=2 DPUs with each K transport links. In this solution all vector processing is performed at the CPU and the compensated vectors are sent to the respective DPUs. A disadvantage of this solution is that the existing vector processing capabilities of the DPUs, i.e. a KxK vector processor, are bypassed and that a complex vector processing unit needs to be added to the CPU.

Fig. 1c illustrates a third existing solution in the same scenario. In this case the DPUs are co-located and a dedicated vector processing unit (VPU) is installed near the DPUs responsible for performing the vector processing. However, this solution exhibits the same problem as the first solution when the DPUs, and thus also the dedicated vector processing unit, are reversely powered, i.e. powered from the end user nodes. Moreover, a further disadvantage is that each DPU now needs two more high speed data interfaces, one towards and one from the VPU which adds cost and makes reverse powering even more challenging.

In the publication of Colmegna ET AL: "Methods for Supporting Vectoring when Multiple Service Providers Share the Cabinet Area", 1 April 2012, XP0550595498, as retrieved from the internet: URL:http://www.assia-inc.com/technology/knowledge-center/white-papers/FASTWEB-ASSIA White Paper on Vectoring (April%202012).pdf, the issue of compatibility between lines within a vectored group and outside of it is addressed, pointing out that there are various solutions that allow reaping the full benefits of vectoring even when multiple SPs are allowed to share the lines in a cabinet, which is the typical case where Sub-Loop Unbundling (SLU) is permitted by the regulator.

The publication KERPEZ K ET AL: "Compatibility of vectored and non-vectored VDSL2", INFORMATION SCIENCES AND SYSTEMS (CISS), 2012 46TH ANNUAL CONFERENCE ON, IEEE, 21 March 2012 (2012-03-21), pages 1-6, XP032241400, DOI: 10.1109/CISS.2012.6310771, ISBN: 978-1-4673-3139-5, shows that a substantial consensus exists on the possibility of mitigating the impact of uncancelled crosstalk on vectored lines. Among the possible mitigation techniques, very good levels of compatibility between vectored and non-vectored VDSL2 can be achieved with Dynamic Spectrum Management.

## Summary of the Invention

It is an object of the present invention to overcome the above mentioned problems and disadvantages. According to a first aspect, this is achieved by a central vectoring processor coupled to Distributed Processing Units DPUs, and configured to process downstream communication signals to be transmitted over communication lines of a vectoring group connecting Customer Premises Equipment CPEs to the DPUs. The central vectoring processor is further configured to pre-compensate the communication signals for inter-DPU crosstalk occurring between communication lines connected to distinct DPUs, thereby obtaining partially pre-compensated communication signals to be transmitted to the respective DPUs for further pre-compensation of intra-DPU crosstalk occurring between communication lines connected to a same DPU.

The pre-compensating may further be performed by a matrix multiplication of the communication signals with a precoding matrix comprising precoding coefficients. Such a precoding coefficient relates to a pre-compensation for cross-talk from a disturber communication line to a victim communication line and the precoding coefficient is zero when the disturber communication line and the victim communication line are connected to a same DPU.

According to a second aspect, the invention also relates to a central vectoring processor coupled to Distributed Processing Units DPUs, and configured to process upstream communication signals received from communication lines of a vectoring group connecting Customer Premises Equipment CPEs to the DPUs. The vectoring processor is further configured to receive communication signals from the respective DPUs that are partially post-compensated for intra-DPU crosstalk occurring between communication lines connected to a same DPU, and to post-compensate the partially post-compensated communication signals for inter-DPU crosstalk occurring between communication lines connected to distinct DPUs.

The post-compensating inter-DPU cross-talk may further be performed by a matrix multiplication of the partially post-compensated communication signals with a post-processing matrix comprising post-processing coefficients relating to a post-compensation for cross-talk from a disturber communication line to a victim communication line. The respective post-processing coefficient is then zero when the disturber communication line and the victim communication line are connected to a same DPU.

The central vectoring processor thus allows to perform a part of the vectoring, i.e. for compensating the inter-DPU cross-talk, centrally. As only the inter-DPU cross-talk is compensated in this processor, the processing power and thus processing complexity is lower than when performing all the vectoring centrally. As the DPUs only need to compensate intra-DPU cross-talk, they only need the communication signals for or from the communication lines connected to the respective DPU.

The central vectoring processor may be remotely coupled to the DPUs or directly, i.e. in the same location. When remotely coupled, the DPUs may be located in one or more access nodes and the central vectoring processor may be located in a Central Processing Unit CPU as part of a Digital Subscriber Line Access Multiplexer (DSLAM) deployed at a Central Office (CO).

In a third aspect, the invention relates to a distributed vectoring processor coupled to a Central Processing Unit CPU and configured to process downstream communication signals to be transmitted over a subset of communication lines of a vectoring group connected to Customer Premises Equipment CPEs. The distributed vectoring processor is configured to receive partially pre-compensated communication signals from the CPU that are pre-compensated for inter-DPU crosstalk occurring between communication lines of the subset and other communication lines of the vectoring group, and to pre-compensate the partially pre-compensated communication signals for intra-DPU cross-talk occurring between communication lines of the subset.

In a fourth aspect, the invention relates to a distributed vectoring processor coupled to a Central Processing Unit CPU and configured to process upstream communication signals received from a subset of communication lines of a vectoring group connected to Customer Premises Equipment CPEs. The distributed vectoring processor is further configured to post-compensate the communication signals for intra-DPU cross-talk occurring between communication lines of the subset, thereby obtaining partially post-compensated signals, and to transmit the partially post-compensated signals to the CPU for further post-compensating inter-DPU cross-talk occurring between communication lines of the subset and other communication lines of the vectoring group.

Preferably , the distributed vectoring processor according to the third and/or the fourth aspect are comprised in a network access node.

The network access node may then further comprise an interface with a backhaul link connecting the network access node with the CPU for sending the partially post-compensated signals to the CPU and/or for receiving the partially pre-compensated communication signals from the CPU. The backhaul link may for example be an optical fibre link. A protocol such as for example XG-PON may further be used to deliver the communication signals from the CPU to the DPU or from a DPU to the CPU.

Similar to the first and second aspect, the CPU may be remotely coupled to the DPUs and, thus, the access node. The CPU may then be part of a Digital Subscriber Line Access Multiplexer (DSLAM) deployed at a Central Office (CO).

According to a preferred embodiment, the network access node is further configured to forward error samples to the CPU for characterization of the inter-DPU cross-talk.

Error samples are generally used in xDSL based systems for the characterization of cross-talk in the communication lines. To obtain the samples, predetermined pilot symbols may be embedded in the communication signals send over the communication lines. The difference between a predetermined pilot symbol and the actually received pilot symbol, is then embedded in the error sample as an error i.e. the error vector. In a downstream case, the error samples are calculated at the end user node, i.e. the Customer Premises Equipment, and send to the corresponding DPU for intra-DPU cross-talk characterization. In an upstream case, the affected pilot symbols are received by the DPU and, hence, the error samples are calculated in the DPU. In both cases, the calculated error samples are thus send back to the CPU for inter-DPU cross-talk compensation in the central vectoring processor.

In a further aspect the invention also relates to a corresponding method for processing downstream communication signals to be transmitted over a subset of communication lines of a vectoring group connecting Customer Premises Equipment CPEs to a Distributed Processing Unit DPU. This method comprises the steps of:

- in a Central Processing Unit CPU, pre-compensating the downstream communication signals for inter-DPU cross-talk occurring between the subset of communication lines and other communication lines of the vectoring group, thereby obtaining partially pre-compensated communication signals;
- transmitting the partially pre-compensated communication signals to the DPU;
- in the DPU, pre-compensating the partially pre-compensated communication signals for intra-DPU crosstalk occurring between the selected communication lines and thereby obtaining pre-compensated communication signals for transmission over the subset of communication lines.

Similarly, the invention also relates in a last aspect to a method for processing upstream communication signals received over a subset of communication lines of a vectoring group connecting Customer Premises Equipment CPEs to a Distributed Processing Unit. The method comprises the steps of:

- in the DPU, post-compensating the communication signals for intra-DPU cross-talk occurring between the subset of communication lines, thereby obtaining partially post-compensated communication signals;
- transmitting the partially post-compensated communication signals to a Central Processing Unit CPU;
- in the CPU, post-compensating the partially post-compensated communication signals for inter-DPU cross-talk occurring between the subset of communication lines and other communication lines of the vectoring group.

It is an advantage of the various aspects that the DPUs and thus the distributed vector processors only perform the intra-DPU crosstalk compensation as the complexity of such a compensation is dependent on the amount of communication lines connected to the DPU itself and not on the amount of parallel DPUs nor the amount of communication lines connected to the other DPUs. The complexity of the distributed vectoring processor in the DPU which performs the compensation is thus known at design time. This is also an advantage because DPUs that comprise a processor that can perform calculations of this complexity are readily available on the market.

It is a further advantage that a DPU only receives communication signals targeted to an end user node or Customer Premises Equipment CPE connected to that DPU over a corresponding communication line as this limits the amount of data sent over the backhaul link to that DPU. This way, compared with the case where the vector processing would be completely performed by the DPU, the backhaul link may be dimensioned smaller, i.e. with a lower throughput for the same amount of connected transport links. The other way around, more DPUs and thus more communication lines may be connected over the same backhaul link to a CPU.

It should be noted that cross-talk is to be understood as the phenomenon by which a signal transmitted on one transport link or communication line, i.e. a disturber line, creates an undesired effect in another transport link or communication line, i.e. a victim line. Crosstalk may be caused by undesired capacitive, inductive, or conductive coupling from one transport link to another.

## Brief Description of the Drawings

Fig. 1 a illustrates performing vector processing in Distributed Processing Units DPUs according to the prior art;

Fig. 1b illustrates performing vector processing in a Central Processing Unit CPU according to the prior art;

Fig. 1c illustrates performing vector processing in a dedicated Vector Processing Unit according to the prior art;

Fig. 2 illustrates a system for downstream processing of communication signals comprising Distributed Processing Units and a Central Processing Unit according to an embodiment of the present invention; and

Fig. 3 illustrates a further detail of a system for performing vector processing according to an embodiment of the present invention.

Fig. 4 illustrates a system for upstream processing of communication signals comprising Distributed Processing Units and a Central Processing Unit according to an embodiment of the present invention.

## Detailed Description of Embodiment(s)

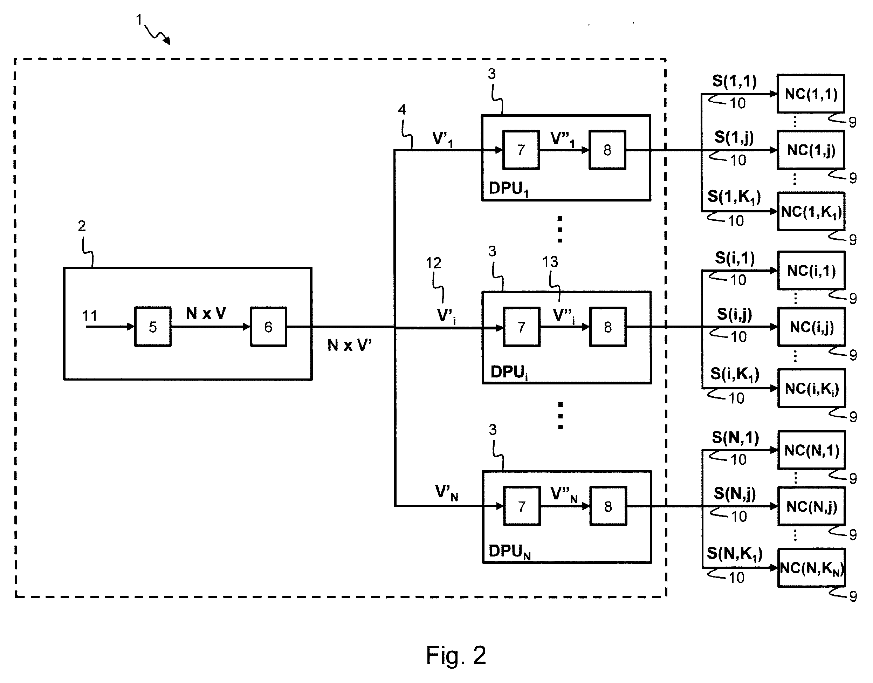

Fig. 2 illustrates a general diagram of a system (1) according to an embodiment of the invention. A Central Processing Unit (CPU) 2 is connected to a plurality of N Distributed Processing Units (DPU) 3 by a backhaul link 4. Each DPU is on its turn connected with a plurality of network components NC 9. $DPU_1$ is connected with $K_1$ network components 9, $DPU_2$ with $K_2$ network components, $DPU_i$ with $K_i$ network components and $DPU_N$ with $K_N$ network components. Each network component is connected to one of the DPUs by a corresponding transport link 10.

Over the transport links 10, signals in the form of time domain symbols S(i,j) are exchanged between a $DPU_i$ and corresponding network component NC(i,j) 9. As the transport links exhibit electromagnetic coupling with each other, cross-talk will occur when transmitting time domain symbols over different transport links 10 during the same time interval. This cross-talk is further divided into two types of cross-talk.

A first type is intra DPU cross-talk, i.e. cross-talk occurring between two transport links of the same DPU. For example, when network component NC(i,j) receives time domain symbol S(i,j) it may also receive a part of the time domain symbols sent over the other transport links, i.e. S(i,1) till $S(i,K_i)$.

A second type of cross-talk is inter DPU cross-talk which is cross-talk occurring between transport links connected to different DPUs. For example, the same network component NC(i,j) may also receive parts of the time domain symbol S(1,j) and S(N,j) from the respective DPUs $DPU_1$ and $DPU_N$.

At some point, the CPU 2 receives binary payload data 2 comprising separate pieces of data addressed to each one of the network components 9. Each of these pieces of data is then to be modulated by the system 1 onto a time domain symbol 10 in order to transport the payload data from a DPU 3 to a network component 9. In the system 1 this modulation is done by Discrete Multi-Tone modulation or DMT.

In a first stage 5, as common in DMT systems, frequency domain vectors V are generated from the binary payload data 11. Each frequency domain vector V then comprises frequency domain representations for all time domain symbols to be sent by a single DPU to connected network components 9. For example, frequency domain vector V1 comprises a representation all the time domain symbols S(1,1) till S(1,K1) as a frequency domain representation. This may be done by representing each time domain symbol as a series of In-phase (I) and Quadrature-phase (Q) or IQ components of a subcarrier frequency tone of the time domain symbol.

In a central vectoring processor 6, the frequency domain vectors V are pre-compensated for inter DPU cross-talk resulting in an updated set of frequency domain vectors V'. This is achieved by adding a vector to V such that, if the vector V' would be transmitted from the DPUs to the corresponding networking components, the received time domain symbols would not exhibit any inter DPU cross-talk. How to perform the pre-compensation will be described below according to specific embodiments.

The updated frequency domain vectors V' are then sent to the respective DPUs, i.e. V1 to DPU1, V2 to DPU2 etc...

In each DPU, the frequency domain vectors are then pre-compensated in a distributed vectoring processor 7 for intra DPU cross talk. Similar to the central vectoring processor 6 in the CPU, a correction vector is again added to the vectors V' in order to obtain the pre-compensated vectors V". As the intra DPU cross talk is only taking into account cross-talk between transport lines of that DPU, the frequency domain vectors of other DPUs are not needed in order to perform the intra DPU cross talk pre-compensation. For example, to calculate V"1, only $V'_1$ is needed as input, to calculate $V"_2$, only $V"_2$ is needed, etc...

In block 8 of the system 1 the frequency domain vectors V" are then further processed and converted to time domain symbols S. Each time domain symbol is then transmitted at the same time over a different transport link 10 to a corresponding network component 9. For example, frequency domain vector $V"_1$ is converted to $K_1$ time domain symbols S(1,1), S(1,2), ..., S(1,K1). During transmission over the transport links 10, the transmitted time domain symbols which are compensated for cross-talk will exhibit some level of interference from the symbols transmitted on the other transport links. As these symbols have already been pre-compensated for cross-talk in central vectoring processor 6 and distributed vectoring processor 7, the received symbols will actually be a time domain representation of frequency domain vectors V before pre-compensation.

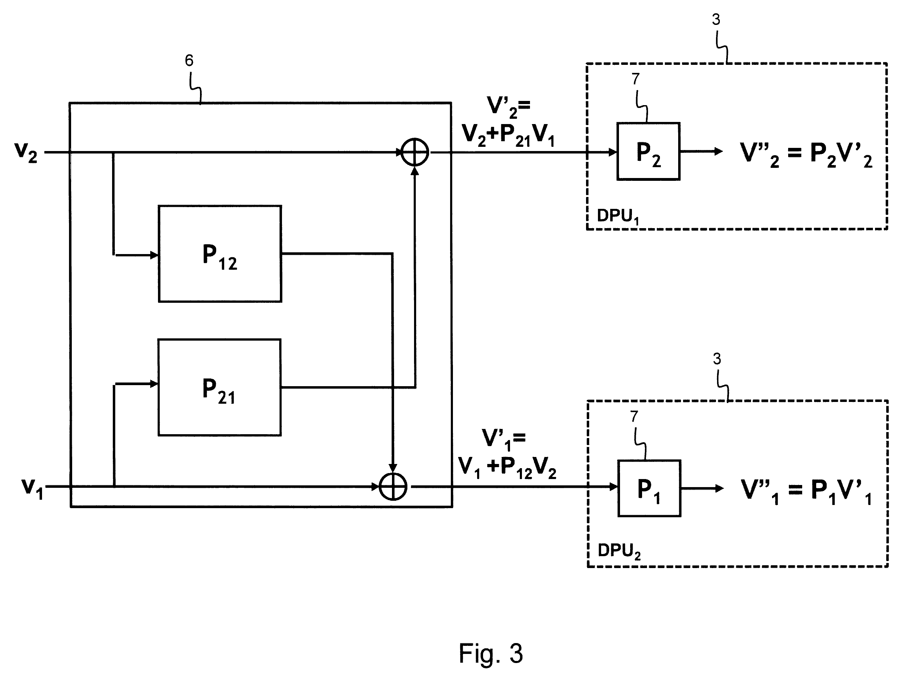

Fig. 3 illustrates the compensation for inter- and intra-DPU cross-talk according to an embodiment of the invention. In this case, there are two DPUs 3, i.e. $DPU_1$ and $DPU_2$, connected by a backhaul link to a CPU and, hence, there are two frequency domain vectors $V_1$ and $V_2$ to be pre-compensated for cross-talk. For the sake of clarity, only the cross-talk compensation blocks 6 in the CPU and 7 in the DPUs are depicted in Fig. 3. The overall cross-talk pre-compensation as known in the art may be performed by a matrix multiplication with a precoding matrix Q and may be expressed as follows:

$$\begin{bmatrix} V_1'' \\ V_2'' \end{bmatrix} = \begin{bmatrix} Q_{11} & Q_{12} \\ Q_{21} & Q_{22} \end{bmatrix} \cdot \begin{bmatrix} V_1 \\ V_2 \end{bmatrix} = Q \cdot \begin{bmatrix} V_1 \\ V_2 \end{bmatrix} \qquad (Eq.1)$$

Several techniques are known in the art to derive the compensation matrices Q.

The system of Fig. 3 for compensating the cross-talk may be mathematically expressed as:

$$\begin{bmatrix} V_1'' \\ V_2'' \end{bmatrix} = \begin{bmatrix} P_1 & 0 \\ 0 & P_2 \end{bmatrix} \cdot \begin{bmatrix} I & P_{12} \\ P_{21} & I \end{bmatrix} \cdot \begin{bmatrix} V_1 \\ V_2 \end{bmatrix} \qquad \text{(Eq.2)}$$

whereby I is the identity matrix. The inter DPU cross-talk pre-compensation in the central vectoring processer 6 is thus expressed by:

$$\begin{bmatrix} V_1' \\ V_2' \end{bmatrix} = \begin{bmatrix} I & P_{12} \\ P_{21} & I \end{bmatrix} \cdot \begin{bmatrix} V_1 \\ V_2 \end{bmatrix} = P \cdot \begin{bmatrix} V_1 \\ V_2 \end{bmatrix} \qquad \text{(Eq.3)}$$

The intra DPU cross-talk pre-compensation in the distributed vectoring processor 7 of the first DPU, i.e. DPU1, is thus expressed by:

$$V_1'' = P_1 . V_1' \qquad \text{(Eq.4)}$$

and the intra DPU cross-talk pre-compensation in the distributed vectoring processor 7 of the second DPU, i.e. DPU2, is thus expressed by:

$$V_2'' = P_2 . V_2' \qquad \text{(Eq.5)}$$

The pre-compensation matrices may then be derived from the overall compensation matrices as follows:

$$P_1 = Q_{11} \qquad \text{(Eq.6)}$$

$$P_2 = Q_{22} \qquad \text{(Eq.7)}$$

$$P_{12} = Q_{11}^{-1} . Q_{12} \qquad \text{(Eq.8)}$$

$$P_{21} = Q_{22}^{-1} . Q_{21} \qquad \text{(Eq.9)}$$

The overall cross-talk compensation matrix Q has thus been split in an inter DPU precoding matrix P according to Eq.3 which is performed by the central vectoring processor 6 in the CPU. This precoding matrix P thus relates to the overall precoding matrix Q by Eq. 8 and 9. but coefficients relating to the pre-compensation of cross-talk between lines connected to different DPUs are set to zero. The overall cross-talk is then further split in several intra DPU pre-compensation matrices $P_i$ according to Eq.4 and Eq.5 which are performed by the distributed vector processors 7 in each respective DPU. These pre-compensation matrices $P_i$ correspond to a pre-compensation of cross-talk of lines connected to a respective DPU as if the DPU was stand-alone. The complexity to perform the equations according to Eq. 3, 4 and 5 is the same as the complexity to perform the equations according to Eq. 1. In other words, performing the compensation according to Fig. 3 requires the same order of multiplications and additions as when the compensation is performed completely in the CPU according to Eq. 1 and Fig. 1 b.

The above equations may be further generalized to the case where there are N DPUs as depicted in Fig.2. Eq. 6 till 9 then become:

$$\begin{bmatrix} V_1'' \\ \vdots \\ V_N'' \end{bmatrix} = \begin{bmatrix} Q_{11} & \cdots & Q_{1N} \\ \vdots & \ddots & \vdots \\ Q_{N1} & \cdots & Q_{NN} \end{bmatrix} \cdot \begin{bmatrix} V_1 \\ \vdots \\ V_N \end{bmatrix} = Q . \begin{bmatrix} V_1 \\ \vdots \\ V_N \end{bmatrix} \qquad \text{(Eq.10)}$$

$$P_i = Q_{ii} \qquad\qquad\qquad \text{(Eq.11)}$$

$$P_{ij} = Q_{ii}^{-1}.Q_{ij} \text{ , if } i \neq j \qquad\qquad \text{(Eq.12)}$$

$$P_{ij} = I \text{ , if } i = j \qquad\qquad\qquad \text{(Eq.13)}$$

where i = *1 ... N, j = 1 ... N*

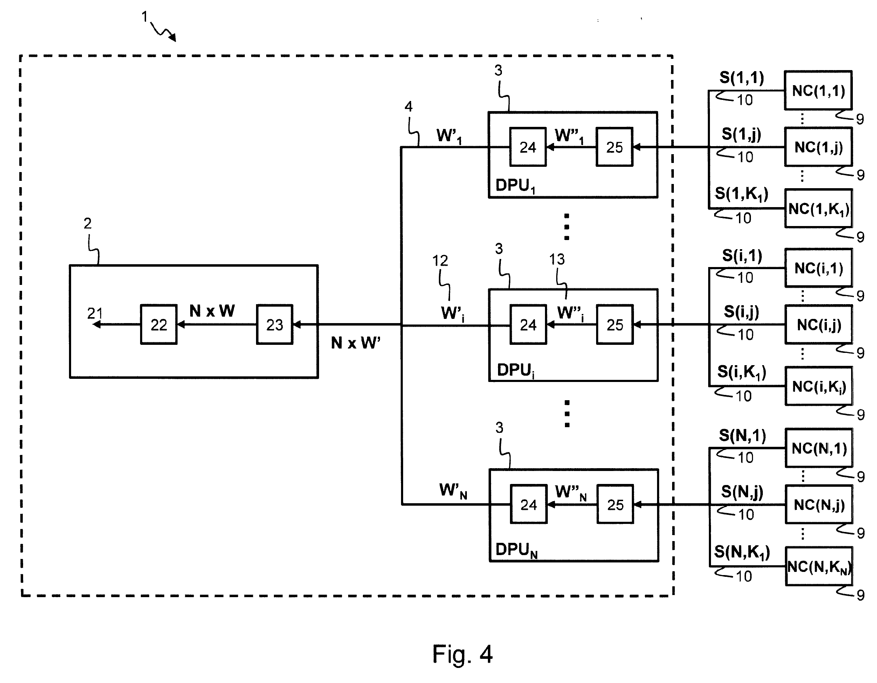

The vector processing by intra-DPU cross-talk pre-compensation in the DPUs and inter-DPU cross-talk pre-compensation in the CPU as explained in the above embodiments and depicted in Fig. 2 and 3 may also be applied for post-compensation of cross-talk in an upstream signal processing chain as depicted in Fig. 4.

In the upstream signal processing chain, the end user nodes 9 transmit time domain symbols S(i,j) over the transport link 10 to a connected $DPU_i$. After conversion to and processing in the frequency domain, the obtained frequency domain vector $W''_i$ is then post-compensated for cross-talk that has occurred between the communication lines of the respective $DPU_i$ obtaining a partially post-compensated frequency domain vector $W'_i$. This post-compensating is performed in the distributed vectoring processor 24 of the respective $DPU_i$. The partially post-compensated frequency domain vectors from all DPUs $W'_1$ till $W'_N$ are then transferred over the backhaul link 4 to the Central Processing Unit CPU 2.

In the CPU, all partially post-compensated frequency domain vectors received from the DPUs are then post-compensated for inter-DPU cross-talk, i.e. cross-talk that has occurred between transport links 10 connected to different DPUs 3. The CPU 2 may then perform further frequency domain processing in block 22 and demap the vectors to binary payload data 21.

The post-compensation in the central vectoring processor 23 and distributed vectoring processors 24 may be performed in similar way as for the downstream case. Thus, when an overall post-processing matrix Q is known for post-compensating the overall cross-talk between all transport lines 10 whereby:

$$\begin{bmatrix} W_1 \\ \vdots \\ W_N \end{bmatrix} = \begin{bmatrix} Q_{11} & \cdots & Q_{1N} \\ \vdots & \ddots & \vdots \\ Q_{N1} & \cdots & Q_{NN} \end{bmatrix} . \begin{bmatrix} W''_1 \\ \vdots \\ W''_N \end{bmatrix} = Q. \begin{bmatrix} W''_1 \\ \vdots \\ W''_N \end{bmatrix} \text{(Eq.14)}$$

Then, the inter-DPU cross-talk post-compensation in the CPU may be performed by:

$$\begin{bmatrix} W_1 \\ \vdots \\ W_N \end{bmatrix} = \begin{bmatrix} I & \cdots & P_{1N} \\ \vdots & \ddots & \vdots \\ P_{N1} & \cdots & I \end{bmatrix} . \begin{bmatrix} W'_1 \\ \vdots \\ W'_N \end{bmatrix} = P. \begin{bmatrix} W'_1 \\ \vdots \\ W'_N \end{bmatrix} \text{(Eq.15)}$$

whereby

$$P_{ij} = Q_{ij}.Q_{jj}^{-1} \text{ , if } i \neq j \qquad\qquad \text{(Eq.16)}$$

$$P_{ij} = I \text{ , if } i = j \qquad\qquad\qquad \text{(Eq.17)}$$

The inter-DPU post-compensation matrix P is thus related to overall post-compensation matrix Q by the equations 16 and 17. The coefficients related to the post-compensation of cross-talk between lines connected to different DPUs are set to zero in the post-compensation matrix P.

The intra-DPU post-compensation in each distributed vectoring processor 24 of a $DPU_i$ may then be expressed by the following matrix operation:

$$W_i' = P_i . W_i''  \quad\quad\quad\text{(Eq.18)}$$

whereby

$$P_i = Q_{ii} \quad\quad\quad\text{(Eq.19)}$$

In typical xDSL applications, for both the upstream and downstream signal processing chain, the cross-talk compensation submatrices $Q_{ij}$ are derived from pilot sequences loaded on specific tones of the symbols S(i,j) sent over the transport links 10.

In the downstream case as depicted in Fig. 2, the end nodes 9 will receive a disturbed version of the pilot sequences whereby the disturbance is caused by the cross-talk induced by the other transport links 10. Each end node 9 will then calculate error samples comprising, on a per tone or group of tones basis, the error vector between the received pilot frequency sample (after equalization) and the selected constellation point onto which the received pilot frequency sample is demapped. According to existing xDSL techniques these error samples are sent back to the DPU connected to the respective end node 9 that calculated the error samples. Based on these error samples the respective $DPU_i$ may thus obtain the pre-coding matrix $P_i$. If the DPU has knowledge of the pilot sequences sent on lines of other $DPU_j$, then DPUi may also obtain $Q_{ji}$, the columns of matrix Q pertaining to the lines of $DPU_i$.

In a similar way, for the upstream case as depicted in Fig. 4, the error samples are calculated by the DPU as the pilot sequences are mapped onto the symbols 10 sent from the end user node 9 to the respective DPU 3.

According to a preferred embodiment the error samples are forwarded or transmitted over the backhaul link 4 from the DPUs 3 to the CPU 2. The CPU then uses the received error samples for the characterization of the inter-DPU cross-talk.

In a typical use case scenario, the cross-talk may change and the matrix Q and thus submatrices $Q_{ij}$ may have to be updated at each time instance t, for instance through first order or 2nd order updates. The entire matrix may be tracked with a low-complex method, for instance, a multiplicative update requiring 2K multiply-accumulates (MACs) in the case where there are 2 DPUs each connected to K transport links.

The computation of the submatrices $P_{ij}$ requires $Qii^{-1}$ which may be obtained by inversion of $Q_{ii}$ or approximated by a first or higher order inverse. Several factors may further facilitate an approximation for $Q_{ii}^{-1}$. First, notice that $Q_{ii}^{-1}$ is further multiplied by $Q_{ij}$ to obtain $P_{ij}$, hence reducing the effect of the approximation on the overall performance (1st order inverse of $Q_{ii}$ leads to performance equivalent to 2nd order inverse of the full matrix). Secondly, inter-DPU cross-talk is expected to be weaker than intra-DPU cross-talk on average. Intra-crosstalk includes on-board crosstalk per DPU and patching issues where the twist quality near the DPU connection is degraded, leading to higher intra-DPU crosstalk.

The tracking may be centralized or distributed. In a centralized mode the submatrices $Q_{ij}$ are refined in the CPU and so are the compensation matrices $P_i$ and $P_{ij}$. Then, the compensation matrices $P_i$ are communicated to the DPUs. The update of the matrices $P_i$ and $P_{ij}$ are coordinated in time, in order to achieve the desired overall precoder properties, such as diagonalization. In a distributed mode, the compensation matrices $P_i$ and $P_{ij}$ may be tracked at the CPU and the DPUs respectively.

Typically, the take rate at any DPU is less than 100%. This implies that typically there are unused vector processor resources in each DPU. These may be employed to reduce the design-time complexity at the CPU, by taking into account statistical information of the expected take rate. The above procedure may be expanded to this scenario. When a $DPU_i$ has $M_i < K_i$ connected end users, the vector of $M_i$ frequency domain samples may be augmented by $(K_i - M_i)$ frequency domain samples from vectors of other DPUs.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A central vectoring processor (6) coupled to Distributed Processing Units DPUs (3), and configured to process downstream communication signals to be transmitted over communication lines (10) of a vectoring group connecting Customer Premises Equipment CPEs (9) to the DPUs (3);
   **characterized in that**:

   said central vectoring processor (6) is further configured to pre-compensate said communication signals (V) for inter-DPU crosstalk occurring between communication lines connected to distinct DPUs, thereby obtaining partially pre-compensated communication signals $(V_1'...V_N')$ to be transmitted to the respective DPUs for further pre-compensation of intra-DPU crosstalk occurring between communication lines connected to a same DPU.

2. A central vectoring processor (6) according to claim 1 whereby said pre-compensating is further performed by a matrix multiplication of said communication signals with a precoding matrix P comprising precoding coefficients; a precoding coefficient relating to a pre-compensation for cross-talk from a disturber communication line to a victim communication line; and whereby said precoding coefficient is zero when said disturber communication line and said victim communication line are connected to a same DPU.

3. A central vectoring processor (6) according to claim 1 or 2 wherein said central vectoring processor is remotely coupled to said DPUs.

4. A central vectoring processor (23) coupled to Distributed Processing Units DPUs (3), and configured to process upstream communication signals received from communication lines (10) of a vectoring group connecting Customer Premises Equipment CPEs (9) to the DPUs (3);
   **characterized in that**:

   the vectoring processor (23) is further configured to receive communication signals $(W_1'...W_N')$ from the respective DPUs that are partially post-compensated for intra-DPU crosstalk occurring between communication lines (10) connected to a same DPU, and to post-compensate said partially post-compensated communication signals $(W_1'...W_N')$ for inter-DPU crosstalk occurring between communication lines (10) connected to distinct DPUs.

5. A central vectoring processor (23) according to claim 4 further configured to perform said post-compensating inter-DPU cross-talk by a matrix multiplication of said partially post-compensated communication signals with a post-processing matrix P comprising post-processing coefficients relating to a post-compensation for cross-talk from a disturber communication line to a victim communication line; and whereby a respective post-processing coefficient is zero when said disturber communication line and said victim communication line are connected to a same DPU.

6. A central vectoring processor (23) according to claim 4 or 5 wherein said central vectoring processor is remotely coupled to said DPUs.

7. A distributed vectoring processor (7) coupled to a Central Processing Unit CPU (2) and configured to process downstream communication signals to be transmitted over a subset of communication lines (10) of a vectoring group connected to Customer Premises Equipment CPEs (9);
   **characterized in that**:

   said distributed vectoring processor (7) is configured to receive partially pre-compensated communication signals $(V_i')$ from said CPU (2) that are pre-compensated for inter-DPU crosstalk occurring between communication lines of said subset and other communication lines of said vectoring group, and to pre-compensate said partially pre-compensated communication signals $(V_i')$ for intra-DPU cross-talk occurring between communication lines of said subset.

8. A distributed vectoring processor (24) coupled to a Central Processing Unit CPU (2) and configured to process upstream communication signals ($W_i''$) received from a subset of communication lines (10) of a vectoring group connected to Customer Premises Equipment CPEs (9);
**characterized in that**:

said distributed vectoring processor (24) is further configured to post-compensate said communication signals ($W_i''$) for intra-DPU cross-talk occurring between communication lines of said subset, thereby obtaining partially post-compensated signals ($W_i'$), and to transmit said partially post-compensated signals ($W_i'$) to said CPU for further post-compensating inter-DPU cross-talk occurring between communication lines of said subset and other communication lines of said vectoring group.

9. A network access node comprising a distributed vectoring processor (7) according to claim 7 and/or comprising a distributed vectoring processor (24) according to claim 8.

10. A network access node according to claim 9 further comprising an interface with a backhaul link (4) connecting said access node with said CPU (2) for sending said partially post-compensated signals ($W_i'$) to said CPU and/or for receiving said partially pre-compensated communication signals ($V_i'$) from said CPU.

11. A network access node according to claim 9 or 10 wherein said network access node is remotely coupled with said CPU.

12. A network access node according any one of claims 9 to 11 wherein said backhaul link is an optical fiber link.

13. A network access node according to any of claims 9 to 12 further configured to forward error samples to said CPU (2) for characterization of said inter-DPU cross-talk.

14. A method for processing downstream communication signals (V) to be transmitted over a subset of communication lines (10) of a vectoring group connecting Customer Premises Equipment CPEs (9) to a Distributed Processing Unit DPU (3); the method comprising the steps of:

- in a Central Processing Unit CPU (2), pre-compensating said downstream communication signals (V) for inter-DPU cross-talk occurring between said subset of communication lines and other communication lines of said vectoring group, thereby obtaining partially pre-compensated communication signals ($V_i'$);
- transmitting said partially pre-compensated communication signals ($V_i'$) to said DPU ($DPU_i$);
- in said DPU, pre-compensating said partially pre-compensated communication signals ($V_i'$) for intra-DPU crosstalk occurring between said selected communication lines and thereby obtaining pre-compensated communication signals ($V_i''$) for transmission over said subset of communication lines (10).

15. A method for processing upstream communication signals ($W_i''$) received over a subset of communication lines (10) of a vectoring group connecting Customer Premises Equipment CPEs (9) to a Distributed Processing Unit ($DPU_i$); the method comprising the steps of:

- in said DPU ($DPU_i$), post-compensating said communication signals ($W_i''$) for intra-DPU cross-talk occurring between said subset of communication lines, thereby obtaining partially post-compensated communication signals ($W_i'$);
- transmitting said partially post-compensated communication signals ($W_i'$) to a Central Processing Unit CPU (2);
- in said CPU (2), post-compensating said partially post-compensated communication signals ($W_i'$) for inter-DPU cross-talk occurring between said subset of communication lines and other communication lines of said vectoring group.

**Patentansprüche**

1. Zentraler Vektorisierungsprozessor (6), der an verteilte Prozessoreinheiten (Distributed Processing Units, DPUs; 3) gekoppelt und konfiguriert ist für das Verarbeiten von Downstream-Kommunikationssignalen, die über Kommunikationsleitungen (10) einer Vektorisierungsgruppe zu übermitteln sind, welche beim Kunden installierte Geräte (Customer Premises Equipment, CPEs; 9) mit den DPUs (3) verbinden;
**dadurch gekennzeichnet, dass**:

besagter zentraler Vektorisierungsprozessor (6) weiterhin konfiguriert ist für die Vorkompensation besagter Kommunikationssignale (V) für ein Inter-DPU-Übersprechen zwischen Kommunikationsleitungen, die mit verschiedenen DPUs verbunden sind, dadurch teilweise vorkompensierte Kommunikationssignale erhaltend $(V_1'...V'_N)$, die an die entsprechenden DPUs zur weiteren Vorkompensation des Intra-DPU-Übersprechen zu übermitteln sind, das zwischen Kommunikationsleitungen auftritt, die mit einer selben DPU verbunden sind.

2. Zentraler Vektorisierungsprozessor (6) nach Anspruch 1, wobei besagte Vorkompensation weiterhin durch eine Matritxmultiplikation besagter Kommunikationssignale mit einer Vorcodierungskoeffizienten umfassenden Vorcodierungsmatrix P erfolgt; wobei ein Vorcodierungskoeffizient sich auf eine Vorkompensation für das Übersprechen von einer Störkommunikationsleitung über eine Opferkommunikationsleitung bezieht; und wobei besagter Vorcodierungskoeffizient Null beträgt, wenn besagte Störkommunikationsleitung und besagte Opferkommunikationsleitung mit einer selben DPU verbunden sind.

3. Zentraler Vektorisierungsprozessor (6) nach Anspruch 1 oder 2, wobei besagter zentraler Vektorisierungsprozessor aus der Ferne an besagte DPUs gekoppelt ist.

4. Zentraler Vektorisierungsprozessor (23), der an verteilte Prozessoreinheiten (Distributed Processing Units, DPUs; 3) gekoppelt und konfiguriert ist für das Verarbeiten von Upstream-Kommunikationssignalen, die über Kommunikationsleitungen (10) einer Vektorisierungsgruppe empfangen werden, welche beim Kunden installierte Geräte (Customer Premises Equipment, CPEs; 9) mit den DPUs (3) verbinden;
   **dadurch gekennzeichnet, dass**:

   der Vektorisierungsprozessor (23) weiterhin konfiguriert ist für den Empfang von Kommunikationssignalen $(W_I'...W_N')$ von den entsprechenden DPUs, die teilweise für das Intra-DPU-Übersprechen nachkompensiert sind, welches zwischen Kommunikationsleitungen (10) auftritt, die mit einer selben DPU verbunden sind, und für das Nachkompensieren der besagten, teilweise nachkompensierten Kommunikationssignale $(W_1'...W_N')$ für Inter-DPU-Übersprechen, das zwischen Kommunikationsleitungen (10) auftritt, die mit verschiedenen DPUs verbunden sind.

5. Zentraler Vektorisierungsprozessor (23) nach Anspruch 4, weiterhin konfiguriert für das Ausführen besagter Nachkompensation des Inter-DPU-Übersprechens durch eine Matrixmultiplikation besagter teilweise nachkompensierter Kommunikationssignale mit einer Vorcodierungsmatrix P, die Vorcodierungskoeffizienten umfasst, die sich auf eine Nachkompensation für das Übersprechen von einer Störkommunikationsleitung über eine Opferkommunikationsleitung beziehen; und wobei ein entsprechender Nachcodierungskoeffizient Null beträgt, wenn besagte Störkommunikationsleitung und besagte Opferkommunikationsleitung mit einer selben DPU verbunden sind.

6. Zentraler Vektorisierungsprozessor (23) nach Anspruch 4 oder 5, wobei besagter zentraler Vektorisierungsprozessor aus der Ferne an besagte DPUs gekoppelt ist.

7. Verteilter Vektorisierungsprozessor (7), der an eine zentrale Prozessoreinheit (Central Processing Unit, DPU; 2) gekoppelt und konfiguriert ist für das Verarbeiten von Downstream-Kommunikationssignalen, die über einen Teilsatz von Kommunikationsleitungen (10) einer Vektorisierungsgruppe zu übermitteln sind, welche mit beim Kunden installierten Geräten (Customer Premises Equipment, CPEs; 9) verbunden ist;
   **dadurch gekennzeichnet, dass**:

   besagter verteilter Vektorisierungsprozessor (7) konfiguriert ist für den Empfang teilweise vorkompensierter Kommunikationssignale $(V_i')$ von besagter CPU (2), die vorkompensiert sind für das Inter-DPU-Übersprechen, das zwischen Kommunikationsleitungen besagten Teilsatzes und weiteren Kommunikationsleitungen besagter Vektorisierungsgruppe auftritt, und für das Vorkompensieren der besagten, teilweise vorkompensierten Kommunikationssignale $(V_i')$ für das Intra-DPU-Übersprechen, das zwischen Kommunikationsleitungen besagten Teilsatzes auftritt.

8. Verteilter Vektorisierungsprozessor (24), der an eine zentrale Prozessoreinheit (Central Processing Unit, DPU; 2) gekoppelt und konfiguriert ist für das Verarbeiten von Upstream-Kommunikationssignalen $(W_i'')$, die von einem Teilsatz von Kommunikationsleitungen (10) einer Vektorisierungsgruppe empfangen werden, welche mit beim Kunden installierten Geräten (Customer Premises Equipment, CPEs; 9) verbunden ist;
   **dadurch gekennzeichnet, dass**:

besagter verteilter Vektorisierungsprozessor (24) weiterhin konfiguriert ist für das Nachkompensieren besagter Kommunikationssignale ($W_i''$) für das Intra-DPU-Übersprechen, das zwischen Kommunikationsleitungen desselben Teilsatzes auftritt, dadurch teilweise nachkompensierte Signale ($W_i'$) hervorbringend, und weiterhin konfiguriert für das Übermitteln der besagten, teilweise nachkompensierten Signale ($W_i'$) an besagte CPU zur weiteren Nachkompensation des Inter-DPU-Übersprechens, das zwischen Kommunikationsleitungen besagten Teilsatzes und weiteren Kommunikationsleitungen der besagten Vektorisierungsgruppe auftritt.

9. Netzwerkzugangsknoten, einen verteilten Vektorisierungsprozessor (7) nach Anspruch 7 und/oder einen verteilten Vektorisierungsprozessor (24) nach Anspruch 8 umfassend.

10. Netzwerkzugangsknoten nach Anspruch 9, weiterhin eine Schnittstelle mit einer Backhaul-Verbindung (4) umfassend, die besagten Zugangsknoten mit besagter CPU (2) verbindet, um die besagten, teilweise nachkompensierten Signale ($W_i,'$) an besagte CPU zu senden und/oder um die besagten, teilweise vorkompensierten Kommunikationssignale ($V_i'$) von besagter CPU zu empfangen.

11. Netzwerkzugangsknoten nach Anspruch 9 oder 10, wobei besagter Netzwerkzugangsknoten aus der Ferne an besagte CPU gekoppelt ist.

12. Netzwerkzugangsknoten nach einem jeglichen der Ansprüche 9 bis 11, wobei besagte Backhaul-Verbindung eine optische Glasfaserverbindung ist.

13. Netzwerkzugangsknoten nach einem jeglichen der Ansprüche 9 bis 12, weiterhin konfiguriert für das Weiterleiten von Fehlerbeispielen an besagte CPU (2) zwecks Charakterisierung besagten Inter-DPU-Übersprechens.

14. Verfahren für das Verarbeiten von Downstream-Kommunikationssignalen (V), die über einen Teilsatz von Kommunikationsleitungen (10) einer Vektorisierungsgruppe zu übermitteln sind, die beim Kunden installierte Geräte (Customer Premises Equipment, CPEs; 9) mit einer DPUs (3) verbindet; wobei das Verfahren die folgenden Schritte umfasst:

   - Das in einer zentralen Prozessoreinheit (CPU, 2) erfolgende Vorkompensieren besagter Downstream-Kommunikationssignale (V) für das Inter-DPU-Übersprechen, das zwischen besagtem Teilsatz von Kommunikationsleitungen und weiteren Kommunikationsleitungen besagter Vektorisierungsgruppe auftritt, dabei teilweise vorkompensierte Kommunikationssignale ($V_i'$) hervorbringend;
   - das Übermitteln der besagten, teilweise vorkompensierten Kommunikationssignale ($V_i'$) an besagte DPU ($DPU_i$);
   - in besagter DPU das Vorkompensieren der besagten, teilweise vorkompensierten Kommunikationssignale ($V_i'$) für das Intra-DPU-Übersprechen, das zwischen besagten ausgewählten Kommunikationsleitungen auftritt, dabei vorkompensierte Kommunikationssignale ($V_i''$) zur Übertragung über besagten Teilsatz von Kommunikationsleitungen (10) hervorbringend.

15. Verfahren für das Verarbeiten von Upstream-Kommunikationssignalen ($W_i''$), die über einen Teilsatz von Kommunikationsleitungen (10) einer Vektorisierungsgruppe empfangen werden, die beim Kunden installierte Geräte (Customer Premises Equipment, CPEs; 9) mit einer Verteilten Prozessoreinheit ($DPD_i$) verbindet; wobei das Verfahren die folgenden Schritte umfasst:

   - in besagter DPU ($DPU_i$) das Nachkompensieren besagter Kommunikationssignale ($W_i''$) für das Intra-DPU-Übersprechen, das zwischen besagtem Teilsatz von Kommunikationsleitungen auftritt, dabei teilweise nachkompensierte Kommunikationssignale ($W_i'$) hervorbringend;
   - das Übermitteln der besagten, teilweise nachkompensierten Kommunikationssignale ($W_i'$) an eine CPU (2);
   - in besagter CPU (2) das Nachkompensieren der besagten, teilweise nachkompensierten Kommunikationssignale ($W_i'$) für das Inter-DPU-Übersprechen, das zwischen besagtem Teilsatz von Kommunikationsleitungen und weiteren Kommunikationsleitungen der besagten Vektorisierungsgruppe auftritt.

**Revendications**

1. Processeur central de vectorisation (6) couplé à des unités de traitement réparties DPU (3), et configuré pour traiter des signaux de communication aval devant être transmis sur des lignes de communication (10) d'un groupe de vectorisation connectant des équipements des locaux d'abonné CPE (9) aux DPU (3) ;
**caractérisé en ce que** :

ledit processeur central de vectorisation (6) est en outre configuré pour précompenser lesdits signaux de communication (V) pour la diaphonie inter-DPU qui se produit entre des lignes de communication connectées à des DPU distinctes, obtenant ainsi des signaux de communication partiellement précompensés ($V_1'...V_N'$) devant être transmis aux DPU respectives pour une précompensation supplémentaire de la diaphonie intra-DPU qui se produit entre des lignes de communication connectées à une même DPU.

2. Processeur central de vectorisation (6) selon la revendication 1, ladite précompensation étant en outre exécutée par une multiplication matricielle desdits signaux de communication avec une matrice de précodage P comprenant des coefficients de précodage ; un coefficient de précodage relatif à une précompensation de diaphonie entre une ligne de communication perturbatrice et une ligne de communication victime ; et ledit coefficient de précodage étant égal à zéro lorsque ladite ligne de communication perturbatrice et ladite ligne de communication victime sont connectées à une même DPU.

3. Processeur central de vectorisation (6) selon la revendication 1 ou 2 dans lequel ledit processeur central de vectorisation est couplé à distance auxdites DPU.

4. Processeur central de vectorisation (23) couplé à des unités de traitement réparties DPU (3), et configuré pour traiter des signaux de communication amont provenant des lignes de communication (10) d'un groupe de vectorisation connectant des équipements des locaux d'abonné CPE (9) aux DPU (3) ;
**caractérisé en ce que** :

le processeur de vectorisation (23) est en outre configuré pour recevoir des signaux de communication ($W_1'...W_N'$) provenant des DPU respectives qui sont partiellement post-compensées pour la diaphonie intra-DPU qui se produit entre des lignes de communication (10) connectées à une même DPU, et pour post-compenser lesdits signaux de communication partiellement post-compensés ($W_1'...W_N'$) pour la diaphonie inter-DPU qui se produit entre des lignes de communication (10) connectées à des DPU distinctes.

5. Processeur central de vectorisation (23) selon la revendication 4 configuré entre outre pour exécuter ladite diaphonie inter-DPU de post-compensation par une multiplication matricielle desdits signaux de communication partiellement post-compensés avec une matrice de post-traitement P comprenant des coefficients de post-traitement relatifs à une post-compensation de diaphonie entre une ligne de communication perturbatrice et une ligne de communication victime ; et un coefficient de post-traitement respectif étant égal à zéro lorsque ladite ligne de communication perturbatrice et ladite ligne de communication victime sont connectées à une même DPU.

6. Processeur central de vectorisation (23) selon la revendication 4 ou 5 dans lequel ledit processeur central de vectorisation est couplé à distance auxdites DPU.

7. Processeur de vectorisation répartie (7) couplé à une unité centrale de traitement CPU (2) et configuré pour traiter des signaux de communication aval devant être transmis sur un sous-ensemble de lignes de communication (10) d'un groupe de vectorisation connectées à des équipements des locaux d'abonné CPE (9) ;
**caractérisé en ce que** :

ledit processeur de vectorisation répartie (7) est configuré pour recevoir des signaux de communication partiellement précompensés ($V_i'$) provenant de ladite CPU (2) qui sont précompensés pour la diaphonie inter-DPU qui se produit entre des lignes de communication dudit sous-ensemble et d'autres lignes de communication dudit groupe de vectorisation, et pour précompenser lesdits signaux de communication partiellement précompensés ($V_i'$) pour la diaphonie intra-DPU qui se produit entre des lignes de communication dudit sous-ensemble.

8. Processeur de vectorisation répartie (24) couplé à une unité centrale de traitement CPU (2) et configuré pour traiter des signaux de communication amont ($W_i''$) provenant d'un sous-ensemble de lignes de communication (10) d'un groupe de vectorisation connectées à des équipements des locaux d'abonné CPE (9) ;
**caractérisé en ce que** :

ledit processeur de vectorisation répartie (24) est en outre configuré pour post-compenser lesdits signaux de communication ($W_i''$) pour la diaphonie intra-DPU qui se produit entre des lignes de communication dudit sous-ensemble, obtenant ainsi des signaux partiellement post-compensés ($W_i'$), et pour transmettre lesdits signaux partiellement post-compensés ($W_i'$) à ladite CPU pour une diaphonie inter-DPU de post-compensation supplémentaire qui se produit entre des lignes de communication dudit sous-ensemble et d'autres lignes de communication dudit groupe de vectorisation.

**9.** Noeud d'accès au réseau comprenant un processeur de vectorisation répartie (7) selon la revendication 7 et/ou comprenant un processeur de vectorisation répartie (24) selon la revendication 8.

**10.** Noeud d'accès au réseau selon la revendication 9 comprenant en outre une interface avec une liaison terrestre (4) connectant ledit noeud d'accès à ladite CPU (2) pour envoyer lesdits signaux partiellement post-compensés ($W_i'$) à ladite CPU et/ou pour recevoir lesdits signaux de communication partiellement précompensés ($V_i'$) à partir de ladite CPU.

**11.** Noeud d'accès au réseau selon la revendication 9 ou 10 dans lequel ledit noeud d'accès au réseau est couplé à distance à ladite CPU.

**12.** Noeud d'accès au réseau selon l'une quelconque des revendications 9 à 11 dans lequel ladite liaison terrestre est une liaison par fibre optique.

**13.** Noeud d'accès au réseau selon l'une quelconque des revendications 9 à 12 configuré en outre pour transmettre des échantillons d'erreur à ladite CPU (2) pour la caractérisation de ladite diaphonie inter-DPU.

**14.** Procédé de traitement de signaux de communication aval (V) devant être transmis sur un sous-ensemble de lignes de communication (10) d'un groupe de vectorisation connectant des équipements des locaux d'abonné CPE (9) à une unité de traitement répartie DPU (3) ; le procédé comprenant les étapes suivantes :

- dans une unité centrale de traitement CPU (2), précompenser lesdits signaux de communication aval (V) pour la diaphonie inter-DPU qui se produit entre ledit sous-ensemble de lignes de communication et d'autres lignes de communication dudit groupe de vectorisation, obtenant ainsi des signaux de communication partiellement précompensés ($V_i'$) ;
- transmettre lesdits signaux de communication partiellement précompensés ($V_i'$) à ladite DPU ($DPU_i$);
- dans ladite DPU, précompenser lesdits signaux de communication partiellement précompensés ($V_i'$) pour la diaphonie intra-DPU qui se produit entre lesdites lignes de communication sélectionnées et obtenant ainsi des signaux de communication précompensés ($V_i''$) à transmettre sur ledit sous-ensemble de lignes de communication (10).

**15.** Procédé de traitement de signaux de communication amont ($W_i''$) reçus sur un sous-ensemble de lignes de communication (10) d'un groupe de vectorisation connectant des équipements des locaux d'abonné CPE (9) à une unité de traitement répartie ($DPU_i$) ; le procédé comprenant les étapes suivantes :

- dans ladite DPU ($DPU_i$), post-compenser lesdits signaux de communication ($W_i''$) pour la diaphonie intra-DPU qui se produit entre ledit sous-ensemble de lignes de communication, obtenant ainsi des signaux de communication partiellement post-compensés ($W_i'$) ;
- transmettre lesdits signaux de communication partiellement post-compensés ($W_i'$) à une unité centrale de traitement CPU (2) ;
- dans ladite CPU (2), post-compenser lesdits signaux de communication partiellement post-compensés ($W_i'$) pour la diaphonie inter-DPU qui se produit entre ledit sous-ensemble de lignes de communication et d'autres lignes de communication dudit groupe de vectorisation.

Fig. 1a (PRIOR ART)

Fig. 1b (PRIOR ART)

Fig. 1c (PRIOR ART)

Fig. 2

$V'_2 =$
$V_2 + P_{21}V_1$

$V''_2 = P_2V'_2$

$V'_1 =$
$V_1 + P_{12}V_2$

$V''_1 = P_1V'_1$

$P_2$

$P_1$

$P_{12}$

$P_{21}$

$V_2$

$V_1$

DPU$_1$

DPU$_2$

Fig. 3

EP 2 852 067 B1

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **COLMEGNA et al.** *Methods for Supporting Vectoring when Multiple Service Providers Share the Cabinet Area,* 01 April 2012, http://www.assia-inc.com/technology/knowledge-center/white-papers/FASTWEB-ASSIA White Paper on Vectoring (April%202012).pdf

- **KERPEZ K et al.** Compatibility of vectored and non-vectored VDSL2. *INFORMATION SCIENCES AND SYSTEMS (CISS), 2012 46TH ANNUAL CONFERENCE ON, IEEE,* 21 March 2012, ISBN 978-1-4673-3139-5, 1-6